# FASCICULE DE BREVET EUROPEEN

(11) **EP 2 859 407 B1**
(45) Date de publication et mention de la délivrance du brevet: **24.08.2016**
(21) Numéro de dépôt: 13733339.9
(22) Date de dépôt: 04.06.2013
(51) Int. Cl.: G02F 1/137, B32B 17/10, G03B 21/56

(54) **ECRAN DE PROJECTION FONCTIONNANT EN REFLEXION COMPRENANT UN SYSTEME A DIFFUSION LUMINEUSE VARIABLE**
REFLEKTIERENDER PROJEKTIONSSCHIRM MIT VARIABLEM LICHTSTREUUNGSSYSTEM
REFLECTIVE PROJECTION SCREEN COMPRISING A VARIABLE LIGHT SCATTERING SYSTEM

(30) Priorité: 08.06.2012 FR 1255373
(43) Date de publication de la demande: 15.04.2015
(73) Titulaire: Saint-Gobain Glass France, 92400 Courbevoie (FR)
(72) Inventeur: GUISET, Pierrick, F-91300 Massy (FR); GAYOUT, Patrick, F- Villemomble (FR)
(74) Mandataire: Baget, Astrid Marie
(86) Numéro de dépôt international: PCT/FR2013/051267
(87) Numéro de publication internationale: WO 2013/182804

(56) Documents cités:
- US-A- 6 055 088

## Description

L'invention concerne un vitrage utilisé comme écran de projection fonctionnant en réflexion comprenant un système à diffusion lumineuse variable. L'invention concerne également l'utilisation d'un vitrage comme écran de projection, un système de projection et un procédé de projection utilisant ledit vitrage.

L'invention concerne plus particulièrement les écrans de projection permettant la visualisation d'une image sur une face de l'écran, cette image pouvant être issue d'un projecteur ou plus généralement d'une source lumineuse, positionnée en regard de ladite face de l'écran. Un écran de projection comporte deux faces. La face principale, ou avant, correspond à celle sur laquelle est projetée l'image provenant de la source lumineuse positionnée dans la même région de l'espace que la source lumineuse. La face opposée correspond, quant à elle, à celle sur laquelle apparaît éventuellement par transparence l'image projetée sur la face principale. Dans ce mode de réalisation, les spectateurs se trouvent du côté du projecteur.

Les écrans de rétroprojection disposent d'une face principale et d'une face opposée possédant les mêmes caractéristiques que celles des écrans de projection précédemment mentionnés. En revanche, un écran de rétroprojection se différencie des écrans de projection par le fait que l'utilisateur et la source lumineuse ne sont pas situés dans la même région de l'espace mais se trouvent de part et d'autre de l'écran. La rétroprojection implique de placer nécessairement le projecteur derrière le vitrage et donc de disposer d'un local à cet endroit. Cette configuration est donc contraignante par la place qu'elle requiert pour sa mise en oeuvre.

Une des solutions proposées pour améliorer les performances de vitrages transparents standards utilisés comme écran de projection consiste à utiliser des vitrages commutables entre un état transparent et un état diffusant. Ces vitrages sont basés sur l'utilisation d'un film fonctionnel comprenant des éléments actifs placé entre deux supports porteurs d'électrode. Les éléments actifs, quand le film est mis sous tension, s'orientent selon un axe privilégié, ce qui autorise la vision à travers le film fonctionnel. Hors tension, en l'absence d'alignement des éléments actifs, le film devient diffusant et empêche la vision.

De tels vitrages sont principalement utilisés actuellement comme écran pour la rétroprojection d'images à l'état diffusant car leurs propriétés ne leur permettent pas une utilisation convenable en tant qu'écran de projection. En effet, la projection directe d'image sur un vitrage commutable, par exemple à cristaux liquides, est de médiocre qualité de par les propriétés optiques inadaptées de ces vitrages telles que la faible réflexion diffuse et la forte transmission lumineuse. La faible réflexion diffuse a pour conséquence d'affaiblir la luminance et donc le contraste de l'image. Cette affaiblissement rend inconfortable l'utilisation de tels vitrage comme écran de projection lorsqu'on les regarde avec de petits angles. Mais surtout, la luminance des images projetées sur ces vitrages décroit fortement lorsque l'angle d'observation augmente. Le problème du faible angle de vue couplé à celui de la faible réflexion diffuse rend difficilement utilisables de tels vitrage comme écran de projection lorsqu'on les regarde avec de grands angles d'observations.

Une autre solution proposée notamment dans la demande de brevet EP 0 823 653, consiste en un vitrage associant un système à transmission/absorption lumineuse variable et un système à diffusion lumineuse variable. Ce vitrage peut être utilisé comme écran de rétroprojection ou de projection. Cependant, il est clairement indiqué que ces systèmes sont relativement satisfaisants en rétroprojection mais ne fonctionnent pas correctement en projection. La projection d'image en réflexion est de qualité médiocre avec là encore une faible luminance, un faible contraste et un faible angle de vue et ce, a fortiori, lorsque la projection est réalisé dans un local non obscurci. Enfin, la projection d'image n'est possible que dans l'état diffusant. Dans l'état transparent, la projection directe est impossible.

Enfin, la demande de brevet EP 0 825 478 décrit des vitrages associant un système actif à propriétés optiques et/ou énergétiques variables pouvant être un système à diffusion lumineuse variable et un moyen de protection thermique. Le moyen de protection thermique comprend un revêtement à propriété de réflexion dans l'infrarouge et/ou dans le visible et/ou dans l'ultra-violet. L'utilisation d'un tel vitrage comme écran de projection ou de rétroprojection n'est pas envisagée dans ce document. En outre, les deux seuls exemples illustrant un vitrage comprenant un système à diffusion lumineuse variable et une couche semi-réfléchissante présentent des valeurs de transmission lumineuse et de réflexion lumineuse mesurées du côté du vitrage au contact du système à diffusion lumineuse variable, ne convenant pas pour une utilisation en tant qu'écran de projection. En effet, la transmission lumineuse est trop élevée ou la réflexion lumineuse trop faible. De plus, la qualité du miroir reste toujours inférieure à celle d'un miroir standard notamment en termes de lumière réfléchie et donc de contraste.

L'utilisation de ces vitrages comprenant par exemple un système à diffusion lumineuse variable muni d'une couche semi-réfléchissante est relativement contraignante. En effet, pour commuter entre un état « miroir » et une transparence acceptable, ce produit a besoin d'ambiances lumineuses adaptées de part et d'autre du vitrage en termes de directivité et de niveau d'éclairement ainsi que d'un système de contrôle des ambiances lumineuses. Ces ambiances lumineuses doivent notamment être en phase avec la commutation du produit, ce qui nécessite :
- une solution d'éclairage artificiel commutable (par exemple des luminaires à base de diodes électroluminescentes (LEDs) actionnés par un interrupteur ou détection de personne),
- une solution d'éclairage artificiel et/ou naturel commutable au rythme de l'ensoleillement jour/nuit,
- le choix d'une couche semi-réfléchissante possédant un couple transmission / réflexion adapté à une ambiance lumineuse donnée.

La présente invention vise à fournir un vitrage à propriétés optiques variables commutable entre un état miroir et un état diffusant, qui convienne tout particulièrement pour une utilisation en tant qu'écran de projection à l'état diffusant. L'invention vise également à pallier les inconvénients des vitrages connus de l'art antérieur en proposant un vitrage permettant notamment :
- de renforcer la luminance,
- de renforcer ou d'améliorer le contraste,
- d'améliorer l'angle de vue, cette visualisation s'effectuant sans défauts optiques, c'est à dire avec une excellente homogénéité de l'image visualisée,
- d'empêcher que l'image projetée apparaisse par transparence sur la face opposée et ainsi conserver la confidentialité,
- de pouvoir être utilisé comme écran de projection peu importe l'ambiance lumineuse de la pièce où s'effectue la projection ou lorsque le vitrage est utilisé comme cloison entre deux pièces, peu importe l'ambiance lumineuse dans chacune de ces deux pièces.

La luminance correspond à l'intensité par unité de surface projetée orthogonalement sur un plan normal à la direction considérée (qui s'exprime en Cd/m²). Ce paramètre correspond à la sensation visuelle de luminosité, causée par la réflexion ou l'émission de lumière par une surface.

Le contraste correspond au rapport entre la luminance maximale de l'image sur la luminance minimale de l'image, c'est-à-dire au rapport entre une image blanche et celle d'une image noire.

Le gain d'un écran (« peak gain ») correspond au rapport, mesuré en un même point de l'image et à un angle de 0°, de la luminance de l'écran sur la luminance d'un écran idéal. Un écran idéal est parfaitement réfléchissant en tout point de sa surface et possède une luminance constante quel que soit l'angle d'observation. Les vitrages utilisés comme écran de projection doivent donc être fortement réfléchissants. Un écran possédant un gain supérieur à 1 renvoie en général plus de lumière aux petits angles qu'aux grands angles. En général, la luminance d'un écran décroit quand l'angle d'observation augmente. Par conséquent, un écran de gain élevé présente une luminosité forte à faible angle d'observation et donc un angle de vue réduit. Un écran à faible gain présente une luminosité moins dépendante de l'angle d'observation et donc un angle de vue élevé.

Selon l'invention, l'angle de vue correspond à deux fois l'angle d'observation pour lequel la luminance de l'écran ou son gain a chuté de 50% (ou angle de ½ gain « half gain »).

L'invention concerne donc un vitrage, ledit vitrage comprenant une face avant et une face arrière caractérisé en ce que ledit vitrage comprend :
- un système à diffusion lumineuse variable comprenant un film fonctionnel susceptible de commuter entre un état transparent et un état diffusant,
- un revêtement comprenant au moins une couche miroir, ledit revêtement étant séparé de la face avant au moins par le film fonctionnel,
ledit vitrage présente :
- une transmission lumineuse TL inférieure à 20%,
- une réflexion lumineuse RL supérieure à 25%.

Ledit vitrage peut être utilisé comme écran de projection fonctionnant en réflexion, ledit vitrage comprenant une face avant sur laquelle est projetée l'image et une face arrière caractérisé en ce que ledit vitrage comprend :
- un système à diffusion lumineuse variable comprenant un film fonctionnel susceptible de commuter entre un état transparent et un état diffusant,
- un revêtement comprenant au moins une couche miroir, ledit revêtement étant séparé de la face avant au moins par le film fonctionnel,
ledit vitrage présente :
- une transmission lumineuse TL inférieure à 20%,
- une réflexion lumineuse RL supérieure à 25%.

L'invention concerne également l'utilisation d'un vitrage comme écran de projection fonctionnant en réflexion.

L'invention concerne encore un procédé de projection en réflexion selon lequel on dispose d'un écran de projection fonctionnant en réflexion et d'un projecteur, ledit procédé consistant à projeter grâce au projecteur des images sur l'écran de projection comprenant un vitrage selon l'invention.

Le vitrage de l'invention est susceptible de commuter entre :
- un état miroir visible sur les deux faces dudit vitrage lorsque le film fonctionnel est rendu transparent,
- un état miroir sur la face arrière du vitrage et un état diffusant sur la face avant du vitrage lorsque le film fonctionnel est rendu diffusant.

Dans toute la description, le vitrage selon l'invention est considéré posé verticalement avec une première face ou face arrière orientée vers la gauche définissant une surface principale externe S1 et une seconde face ou face avant, opposée à la première face, orientée vers la droite définissant une surface principale externe S2. Les sens des expressions « avant » et « arrière » sont ainsi à considérer par rapport à cette orientation. De manière arbitraire, on considère que la face arrière du vitrage est la face du vitrage séparée du film fonctionnel du système à diffusion lumineuse variable par la couche miroir et la face avant du vitrage est la face du vitrage séparée de la couche miroir par le film fonctionnel. La surface S2 délimite donc la face principale de l'écran, ainsi que le côté sur lequel est projetée une image provenant d'une source lumineuse. La surface S1 délimite la face opposée de l'écran. Le projecteur et l'observateur sont situés en regard de la face avant.

Le vitrage comprend de préférence un système à diffusion lumineuse variable électrocommandable. Ces systèmes comprennent un film fonctionnel, susceptible de commuter entre un état transparent et un état diffusant, encadré par deux supports porteurs d'électrodes avant et arrière, de préférence transparents. Les électrodes comprennent chacune au moins une couche électroconductrice et sont directement au contact du film fonctionnel. Le film fonctionnel comprend des éléments actifs dont l'orientation est modifiée par application d'un champ électrique ou magnétique.

Ces systèmes à diffusion lumineuse variable électrocommandable comprennent, par exemple, les systèmes à cristaux liquides.

Selon l'invention, on entend par « état ON » l'état transparent du film fonctionnel lorsque le vitrage est sous tension et par « état OFF » l'état diffusant du film fonctionnel quand le vitrage n'est plus sous tension. Les éléments actifs, quand le film est mis sous tension, s'orientent selon un axe privilégié, ce qui permet à un rayonnement d'être transmis et donc autorise la vision à travers le film fonctionnel.

Dans la mesure où un revêtement comprenant une couche miroir est juxtaposé au système à diffusion lumineuse variable, lorsque la vision est rendue possible, on voit alors la couche miroir à travers le film fonctionnel.
On observe donc un état « miroir » sur les faces avant et arrière du vitrage à l'état ON.

Hors tension, en l'absence d'alignement des éléments actifs, le film devient diffusant et empêche la vision directe de la couche miroir. Par conséquent, on observe un parfait miroir sur la face arrière du vitrage et une couche diffusante sur la face avant du miroir. Le vitrage peut être alors utilisé comme écran de projection sur la face avant diffusante.

Les éléments actifs du film fonctionnel commutent de manière réversible d'un état translucide vers un état transparent par application d'un champ électrique. Le champ électrique appliqué est de préférence alternatif.

L'association d'une couche miroir et d'un système à diffusion lumineuse variable permet de commuter sur la face avant entre un état miroir et un état diffusant présentant une très faible transmission lumineuse. L'écran de projection comprenant une face avant diffusante présente une bonne luminosité, un contraste élevé et un angle de vue supérieur par rapport à un vitrage comprenant uniquement un système de diffusion lumineuse variable.

La qualité du miroir est celle d'un miroir standard. Elle est donc de très bonne qualité et plus particulièrement sur la face arrière du vitrage. La face arrière est à l'état miroir peu importe l'état du système à diffusion lumineuse variable.

Le vitrage de l'invention peut donc être utilisé à l'état ON en cloison interne comme miroir des deux côtés pour structurer un espace et à l'état OFF pour structurer un espace avec une face miroir et une face diffusante convenant comme écran de projection.

Selon l'invention, il est possible de projeter des images dans des environnements éclairés alors que cela n'était pas envisageable pour les vitrages comprenant des systèmes à diffusion lumineuse variable, par exemple à cristaux liquides, de l'art antérieur.

De plus, la qualité des images projetées est très fortement améliorée, notamment le contraste. La restitution des couleurs et des teintes des images projetées est préservée grâce à la neutralité de couleur de l'écran. Ces propriétés sont obtenues sans nuire à la fonctionnalité « miroir » du vitrage lorsque le film fonctionnel est à l'état transparent. L'invention permet non seulement d'améliorer l'image en projection à l'état diffusant mais également de préserver l'aspect du vitrage dans son état miroir.

La qualité de l'écran dépend des propriétés de transmission et de réflexion du vitrage. Plus la transmission lumineuse est faible, plus la réflexion lumineuse est élevée, meilleure sera la qualité de l'écran et meilleure sera la qualité du miroir. Par exemple, une image réfléchie sur un miroir présentant une réflexion élevée et une transmission faible sera plus lumineuse.

L'invention permet donc par rapport à un vitrage comprenant uniquement un système à diffusion lumineuse variable :
- d'augmenter la luminance du blanc mesurée en cd/m²,
- d'améliorer le contraste et donc la qualité de la projection peu importe les conditions d'éclairement (pénombre ou pièce éclairée), notamment :
   - lorsque l'écran de projection est utilisé dans une pièce de projection, le niveau d'éclairement peut être compris de quelque lux à 800 lux,
   - lorsque l'écran de projection est utilisé en tant que paroi ou cloison entre deux pièces, une pièce de projection et une pièce connexe, le niveau d'éclairement dans la pièce connexe peut être élevé et notamment supérieur à 300 lux,
- d'améliorer l'angle de vue et par conséquent permettre une bonne vision et lisibilité de l'image.

Suivant des modes particuliers de réalisation, le vitrage selon l'invention comporte en outre l'une ou plusieurs des caractéristiques techniques ci-dessous, prise(s) isolément ou suivant toutes les combinaisons techniquement possibles :
- il présente une transmission lumineuse TL inférieure à 5% et/ou une réflexion lumineuse mesurée supérieure à 50%,
- la couche miroir est une couche métallique ou une couche comprenant un nitrure métallique comprenant de préférence au moins un métal choisi dans le groupe constitué de l'argent (Ag), l'aluminium (Al), le titane (Ti), l'or (Au), le nickel (Ni), le chrome (Cr), le cuivre (Cu), le rhodium (Rh), le platine (Pt), le palladium (Pd), le cobalt (Co), le manganèse (Mn), le molybdène (Mo), le tungstène (W), le hafnium (Hf), le niobium (Nb), le fer (Fe) et le tantale (Ta), y compris des alliages de ceux-ci,
- la couche miroir est choisie parmi le groupe constitué d'une couche d'argent, de chrome, de niobium, de nitrure de niobium, d'acier, de préférence inoxydable ou d'alliages comprenant majoritairement (en masse) de l'argent, du chrome, du fer ou du Niobium.
- la couche miroir présente une épaisseur supérieure à 50 nm, de préférence comprise entre 50 et 80 nm,
- la couche miroir est placée à l'intérieur du vitrage,
- la couche miroir est la couche électroconductrice de l'électrode arrière,
- le vitrage présente un angle de vue supérieur à 20°, de préférence supérieur à 25°,
- les faces avant et arrière du vitrage sont lisses.

Les dimensions du vitrage utilisé comme écran de projection selon l'invention peuvent varier dans une large gamme. Le vitrage peut notamment avoir une hauteur et/ou une largeur de quelques centimètres à plusieurs mètres, notamment d'au moins 50 cm, d'au moins 1 m, d'au moins 2 m, d'au moins 4 m, d'au moins 10 m.

L'invention a également pour objet un système de projection comprenant un vitrage utilisé comme écran de projection tel que défini dans la présente demande et un projecteur. Le vitrage est agencé de telle sorte que la lumière incidente en provenance du projecteur arrive sur le film fonctionnel avant d'arriver et de se réfléchir sur la couche miroir.

Selon l'invention, le vitrage comprend un revêtement comprenant au moins une couche miroir. On entend par « couche miroir », une couche qui présente une fonction réfléchissante forte et une faible transmission lumineuse. Une couche miroir est une couche qui réfléchit la lumière de manière spéculaire.

Les propriétés photométriques du vitrage utilisé selon l'invention dépendent des propriétés photométriques de la couche miroir notamment de la transmission lumineuse et de la réflexion lumineuse de cette couche. En effet, de par la présence de cette couche miroir, le vitrage l'incorporant ne pourra avoir des valeurs de transmission plus élevées. De préférence, la couche miroir ou le vitrage présente par ordre de préférence croissant :
- une transmission lumineuse TL inférieure ou égale à 20%, inférieure ou égale à 15%, inférieure ou égale à 10%, inférieure ou égale 8%, inférieure ou égale 5%, inférieure ou égale 3%, inférieure ou égale à 1%, inférieure ou égale 0,1%,
- une réflexion lumineuse RL supérieure ou égale à 25%, supérieure ou égale 35%, supérieure ou égale à 45 %, supérieure ou égale à 55 %, supérieure ou égale à 65 %, supérieure ou égale à 75 %, supérieure ou égale à 85 %, supérieure ou égale à 90 %.

La transmission lumineuse TL et la réflexion lumineuse RL sont mesurées selon la norme ISO 9050 : 2003 (illuminant D65, 2° observateur). La réflexion lumineuse est mesurée à l'état On et/ou OFF côté face avant et/ou face arrière. De préférence, la réflexion lumineuse est mesurée côté face avant à l'état ON

La couche miroir peut être une couche métallique ou une couche comprenant un nitrure métallique comprenant de préférence au moins un métal choisi parmi l'argent (Ag), l'aluminium (Al), le titane (Ti), l'or (Au), le nickel (Ni), le chrome (Cr), le cuivre (Cu), le rhodium (Rh), le platine (Pt), le palladium (Pd), le cobalt (Co), le manganèse (Mn), le molybdène (Mo), le tungstène (W), le hafnium (Hf), le niobium (Nb), le fer et le tantale (Ta), y compris des alliages de ceux-ci. Des exemples d'alliages convenant salon l'invention incluent des alliages binaires chrome-aluminium, aluminium-silicium, chrome-silicium, aluminium titane, aluminium tantale et des alliages tri-composants comme l'alliage Cr-Al-Si ainsi que l'acier (alliage fer-carbone) et l'acier inoxydable (alliage fer-carbone chrome).

De préférence, la couche miroir est une couche métallique et/ou une couche comprenant un nitrure métallique choisie parmi une couche d'argent, de chrome, de niobium, de nitrure de niobium, d'acier, de préférence inoxydable ou d'alliage comprenant majoritairement de l'argent, du chrome, du fer ou du Niobium.

De manière particulièrement préférée, la couche métallique est une couche à base de chrome. Ces couches ne sont avantageusement pas altérées par une atmosphère humide, contrairement aux couches métalliques à base d'argent. Une couche miroir comprenant une couche métallique à base de chrome présente typiquement une réflexion lumineuse supérieure à 55%, de l'ordre de 60% et une transmission lumineuse inférieure à 5%, de l'ordre de 3%.

La couche métallique ou la couche comprenant un nitrure métallique a une épaisseur suffisante pour conférer au vitrage l'incorporant les propriétés de transmission et de réflexion lumineuse requises. Par exemple, la réflexion lumineuse par une couche d'argent atteint une valeur maximale pour une épaisseur d'au moins 60 nm. La transmission lumineuse par une couche d'argent est nulle pour des épaisseurs d'au moins 100 nm.

La couche métallique ou comprenant un nitrure métallique présente par ordre de préférence croissant :
- une épaisseur supérieure ou égale à 10 nm, supérieure ou égale à 15 nm supérieure ou égale à 20 nm, supérieure ou égale à 25 nm, supérieure ou égale à 30 nm, supérieure ou égale à 40 nm, supérieure ou égale à 50 nm,
- une épaisseur inférieure ou égale 1 µm, inférieure ou égale à 500 nm, inférieure ou égale à 200 nm, inférieure ou égale à 100 nm, inférieure ou égale à 80 nm.

De préférence, lorsque la couche est une couche d'argent ou de chrome, elle présente par ordre de préférence croissant une épaisseur supérieure ou égale à 15 nm, supérieure ou égale à 20 nm, supérieure ou égale à 30 nm, supérieure ou égale à 40 nm, supérieure ou égale à 50 nm.

De préférence, lorsque la couche est une couche de niobium ou de nitrure de niobium, elle présente par ordre de préférence croissant une épaisseur supérieure ou égale à 25 nm, supérieure ou égale à 30 nm, supérieure ou égale à 40 nm, supérieure ou égale à 50 nm.

Selon l'invention, le revêtement comprenant la couche miroir peut comprendre un empilement de couches comprenant la couche miroir et une ou plusieurs sous-couches et/ou sur-couches. Ces sous-couches et/ou sur-couches servent à ajuster des propriétés variées telles que la couleur, la durabilité et la résistance chimique. Le choix de la nature et des épaisseurs de ces sous-couches ou sur-couches est réalisé de façon à ne pas altérer les propriétés de réflexion et de transmission lumineuse de la couche miroir.

Ces sous-couches et sur-couches peuvent comprendre des oxydes et/ou des nitrures de métaux ou de métalloides, de préférence choisis parmi le titane, l'étain, le zinc, le silicium, l'aluminium et le zirconium.

A titre d'oxydes ou de nitrures de métaux ou de métalloïdes, on peut citer la silice (SiO₂), l'oxyde d'aluminium (Al₂O₃), l'oxyde de titane (TiO₂), l'oxyde d'étain (SnO2), l'oxyde mixte de zinc et d'étain (SnZnOx), les oxynitrures comme l'oxynitrure de silicium SiON ou les nitrures comme le nitrure de silicium Si₃N₄ ou le nitrure d'aluminium AIN, le nitrure de silicium et de zirconium (SiZrNx). Ces sur-couches et sous-couches ont de préférence une épaisseur inférieure à 150 nm.

Le revêtement comprenant la couche miroir peut être obtenu par tout procédé connu permettant le dépôt de couches telles que définies ci-dessus. On peut notamment citer la pulvérisation cathodique assistée par un champ magnétique, l'évaporation, la technique sol-gel, ainsi que des techniques de dépôt en phase vapeur (CVD). De préférence, les couches ou revêtements sont réalisés par pulvérisation cathodique.

Le revêtement comprenant la couche miroir est de préférence déposé sur l'une des faces d'un substrat. Un empilement comprenant une couche métallique à base de chrome peut être celui utilisé dans le produit MIRASTAR® vendu par la société SAINT-GOBAIN GLASS. Un empilement comprenant une couche métallique à base d'argent peut être celui utilisé dans le produit MIRALITE® vendu par la société SAINT-GOBAIN GLASS.

A titre de système à diffusion lumineuse variable électrocommandable, on peut utiliser un système à cristaux liquides.

Les systèmes à diffusion lumineuse variable électrocommandables à cristaux liquides comprennent un film fonctionnel contenant des cristaux liquides. Ces systèmes à cristaux liquides commutent de manière réversible par application d'un champ électrique, d'un état transparent vers un état non transparent. Le film fonctionnel comprend, de préférence, une matière polymérique dans laquelle sont dispersées des gouttelettes de cristaux liquides, notamment nématiques à anisotropie diélectrique positive.

Les cristaux liquides utilisés pour des applications vitrage font, de préférence, partie de la famille des cristaux liquides calamitiques. Cette famille de cristaux liquides est généralement divisée en trois groupes, nématiques, cholestériques et smectiques.

Pour des applications en grande surface, on parle généralement de cristaux liquides dispersés (PDLC, Polymer-Dispersed Liquid Cristal) et des cristaux liquides encapsulés (NCAP, Nematic Curvilinear Aligned Phase) notamment ceux utilisés dans les vitrages Priva-Lite®. Ces systèmes sont issus de cristaux liquides nématiques enfermés dans des microcavités. Les films NCAP sont préparés en général à partir d'une émulsion, tandis que les films PDLC sont en général issus d'une solution isotrope qui forme des phases séparées pendant le séchage.

On peut également utiliser selon l'invention des cristaux liquides de type CLC (« Cholesteric Liquid Cristal ») ou NPD-LCD (« Non-homogenous Polymer Dispersed Liquid Crystal Display »).

On peut également utiliser, par exemple, une couche comprenant un gel à base de cristaux liquides cholestériques contenant une faible quantité de polymère réticulé, comme ceux décrits dans le brevet WO-92/19695 ou des cristaux liquides qui commutent avec variation de transmission lumineuse TL. Plus largement, on peut donc choisir des PSCT (« Polymer Stabilized Cholesteric Texture »).

On peut également utiliser des cristaux liquides bistables tels que décrits dans le brevet EP 2 256 545 qui commutent sous l'application d'un champ électrique alternatif sous forme impulsionnelle et qui reste dans l'état commuté jusqu'à l'application d'une nouvelle impulsion.

Le film fonctionnel comprenant les cristaux liquides a, de préférence, une épaisseur comprise entre 3 et 100 µm, de préférence comprise entre 3 à 50 µm et mieux comprise entre 3 à 30 µm.

Le film fonctionnel peut comprendre un film polymère dans lequel sont dispersés des cristaux liquides comme éléments actifs ou une couche de cristaux liquides. Le film polymère peut être un film polymère réticulé dans lequel sont dispersés les cristaux liquides ou une émulsion de cristaux liquides dans un medium. Les cristaux liquides connus sous les termes de NCAP, PDLC, CLC, NPD-LCD peuvent être utilisés.

Le film fonctionnel peut être un film polymère qui comprend comme éléments actifs des cristaux liquides dispersés sous forme de gouttelettes dans un medium approprié. Les cristaux liquides peuvent être nématiques à anisotropie diélectrique positive tels que les cristaux liquides du type NCAP ou PDLC. Des exemples de film fonctionnel à cristaux liquides sont décrits notamment dans les brevets européen EP-88 126, EP-268 877, EP-238 164, EP-357 234, EP-409 442 et EP-964 288 et les brevets américains US 4,435,047, US 4,806,922 et US 4,732,456.

Ces films polymères peuvent être obtenus par évaporation de l'eau contenue dans une émulsion aqueuse de cristaux liquides et d'un médium comprenant un polymère soluble dans l'eau.

Le médium est de préférence à base d'un polymère de la famille des latex de type polyuréthane PU et/ou d'un polymère de type alcool polyvinylique (PVA), généralement préparé en phase aqueuse dans une proportion de polymères de 15 à 50% en poids par rapport à l'eau.

En règle générale, la biréfringence des cristaux liquides est comprise entre 0,1 et 0,2 et varie notamment en fonction du médium utilisé. Leur biréfringence est de l'ordre de 0,1 si le polymère du médium est de type polyuréthane (PU) et de l'ordre de 0,2 s'il est de type alcool polyvinylique (PVA).

Les éléments actifs vis-à-vis de la diffusion lumineuse sont avantageusement sous forme de gouttelettes de diamètre moyen compris entre 0,5 et 3 µm, notamment entre 1 et 2,5 µm, dispersées dans le médium. La taille des gouttelettes dépend d'un certain nombre de paramètres, dont notamment la facilité d'émulsion des éléments actifs dans le médium considéré. De préférence, ces gouttelettes représentent entre 120 et 220% en poids du médium, notamment entre 150 et 200% en poids, hormis le solvant, généralement aqueux dudit médium.

De manière particulièrement préférée, on choisit des cristaux liquides sous forme de gouttelettes d'un diamètre d'environ 2,5 µm quand le médium est à base de latex de polyuréthane (biréfringence d'environ 0,1) et d'un diamètre d'environ 1 µm quand le médium est plutôt à base de polyvinylalcool (biréfringence d'environ 0,2).

Un film fonctionnel comportant une émulsion liquide de cristaux liquides nématiques comprend de préférence une épaisseur d'environ 10 à 30 µm, mieux de 20 à 25 µm.

Ce type de film, une fois feuilleté et incorporé entre deux substrats, est commercialisé par la société SAINT-GOBAIN GLASS sous la dénomination commerciale Privalite®.

Un film polymère comprenant un film polymère réticulé dans lequel sont dispersés les cristaux liquides peut être obtenu par préparation d'un mélange comprenant des cristaux liquides, des monomères et de préférence un initiateur de polymérisation suivie de la réticulation des monomères. Les cristaux liquides pouvant être utilisés sont notamment connus sous les termes de NCAP, PDLC, CLC, NPD-LCD.

Le film polymère comprenant les cristaux liquides peut comprendre des composés tels que le composé 4-((4-Éthyle-2,6-difluorophényl)-éthinyl)-4'-propylbiphényl et 2-Fluor-4,4'-bis(trans-4-propylcyclohexyl)-biphenyl par exemple vendu par la société Merck sous la référence MDA-00-3506.

Le film polymère peut comprendre les composés connus décrits dans le document US 5,691,795. A titre de cristaux liquides convenant selon l'invention, on peut citer le produit de Merck Co., Ltd, commercialisé sous le nom commercial « E-31 LV » qui correspond à un mélange de plusieurs composés cristaux liquides. De manière préférée, on utilise un mélange de ce produit avec une substance chirale, par exemple le 4-cyano-4'-(2-méthyl)butylbiphényle, un monomère par exemple le 4,4'-bisacryloylbiphényle et un photoinitiateur UV, par exemple l'éther méthylique de benzoïne (CAS N° 3524-62-7). Ce mélange est appliqué sous forme de couche au contact de l'électrode. Après réticulation ou polymérisation du mélange actif, comprenant les cristaux liquides par irradiation à la lumière UV, il se forme un réseau polymère dans lequel les cristaux liquides sont incorporés.

Un film polymère comprenant un réseau polymère dans lequel les cristaux liquides sont incorporés peut avoir une épaisseur allant de 3 à 100 µm, de préférence 3 à 60 µm, et mieux 3 à 20 µm.

Selon un autre mode de réalisation, le film fonctionnel peut comprendre une couche de cristaux liquides. La couche de cristaux liquides comprend de préférence comme éléments actifs des cristaux liquides connus sous les termes de NCAP, PDLC, CLC, NPD-LCD.

Cette couche de cristaux liquides peut comprendre des cristaux liquides et des espaceurs. Les espaceurs peuvent être en verre ou en matière plastique, de préférence dure, par exemple en polyméthacrylate de méthyle (PMMA). Ces espaceurs sont de préférence transparents et/ou non-conducteurs et/ou présentent un indice optique sensiblement égal à l'indice optique de la matrice de la couche de cristaux liquides. Les espaceurs sont par exemple sous forme de billes ou ovales.

La couche de cristaux liquides ne contient pas nécessairement de polymère constituant un medium ou un réseau. Cette couche peut être uniquement constituée des cristaux liquides et des espaceurs. Les cristaux liquides sont appliqués (sans monomère additionnel) sur une épaisseur de 3 à 60 µm, de préférence 3 et 20 µm au contact de l'électrode. Des composés convenant pour ce mode de réalisation sont décrits par exemple dans le document US 3,963,324. Selon ce mode de réalisation, l'épaisseur de la couche de cristaux liquides peut être comprise entre 10 et 30 µm, de préférence 10 à 20 µm.

La couche de cristaux liquide peut avoir une épaisseur allant de 3 à 100 µm, de préférence 3 à 60 µm, et mieux 3 à 20 µm.

Le film fonctionnel est encadré par deux électrodes elles-mêmes encadrées par deux supports, les électrodes étant en contact direct avec le film fonctionnel. L'ensemble constitué par une électrode et un support correspond à un support porteur d'électrode ou à une électrode autosupportée.

Les électrodes comprennent chacune au moins une couche électroconductrice. La couche électroconductrice peut comprendre des oxydes conducteurs transparents (TCO), c'est-à-dire des matériaux qui sont à la fois bon conducteurs et transparents dans le visible, tels que l'oxyde d'étain et d'indium (ITO), In₂O₃, SnO2 dopé à l'antimoine ou au fluor (SnO₂ : F) ou ZnO dopé à l'aluminium (ZnO : Al). Une couche électroconductrice à base d'ITO (oxyde d'indium dopé à l'étain) présente une résistance d'environ 100 ohms par carré.

La couche électroconductrice peut également comprendre des polymères conducteurs transparents qui sont des composés organiques à doubles liaisons conjuguées dont la conductivité peut être améliorée par dopage chimique ou électrochimique.

Ces couches électroconductrices à base d'oxydes conducteurs ou de polymères conducteurs sont de préférence déposées sur des épaisseurs de l'ordre de 50 à 100 nm.

La couche électroconductrice peut également être une couche métallique, par exemple en Ag, Al, Pd, Cu, Pd, Pt In, Mo, Au. La couche électroconductrice métallique peut être une couche mince, dites TCC (« Transparent conductive coating ») présentant, de préférence, une épaisseur comprise entre 2 et 50 nm. Une couche électro-conductrice servant d'électrodes peut être déposée sur une face d'un support et ainsi former un support porteur d'électrode. Une couche électro-conductrice servant d'électrodes peut également être déposée directement sur le film fonctionnel. Lorsqu'une couche électroconductrice est déposée sur le film fonctionnel, un support est ensuite assemblé au contact de l'électrode de façon à former le support porteur d'électrode. Ces couches peuvent être déposées par un grand nombre de techniques connues telles que la pulvérisation cathodique assistée par un champ magnétique, l'évaporation, la technique sol-gel, ainsi que des techniques de dépôt en phase vapeur (CVD).

Les électrodes comprenant une couche électriquement conductrice sont connectées à une alimentation en énergie. L'alimentation en énergie peut être une alimentation électrique utilisant des tensions comprises entre 0 et 110 V.

Les supports peuvent être souples, flexibles ou rigides et choisis notamment parmi les substrats en verre ou en polymère et les intercalaires ou feuilles en matière plastique thermoformable ou sensible à la pression.

Ces supports peuvent donc être des substrats ou des feuilles de verre, par exemple des feuilles de verre plat flotté ou des feuilles de verre polies. L'épaisseur des feuilles ou substrats de verre est comprise en général entre 0,5 mm et 10 mm.

Les matières plastiques constituant les intercalaires ou feuilles incluent le polyuréthane (PU), les copolymères d'éthylène/acétate de vinyle (EVA), le polyvinyl butyral (PVB), les copolymères de polyéthylène et d'acrylate, le polyéthylène téréphtalate (PET). Comme autres matières plastiques, on peut aussi utiliser des polyoléfines comme le polyéthylène (PE) et le polypropylène (PP) ; des polyesters tels que le polyéthylène téréphtalate (PET) et le polynaphtalate d'éthylène (PEN) ; le polychlorure de vinyle (PVC) ou des résines ionomères.

Les feuilles en polyuréthane (PU), en copolymères d'éthylène/acétate de vinyle (EVA) ou en polyvinyl butyral (PVB) ont par exemple une épaisseur de préférence comprise entre 0,1 mm et 2 mm.

Les feuilles de PET ont par exemple une épaisseur comprise entre 50 µm et 1 mm, de préférence comprise entre 100 et 500 µm, mieux comprise entre 150 et 200µm, notamment d'environ 175 µm.

Le système à diffusion lumineuse variable comprenant le film fonctionnel peut s'étendre sensiblement sur toute la surface du vitrage, ou sur au moins une partie du vitrage. De préférence, le système à cristaux liquides s'étend sur toute la surface du vitrage.

Le vitrage peut comprendre un ou plusieurs autres supports tels que décrits ci-dessus, avant ou arrière, ne portant pas les électrodes.

Selon l'invention, on entend par « face interne », la face d'un support constituant le vitrage au regard du film fonctionnel, c'est à dire la face du support la plus proche du film fonctionnel, et par « face externe », la face opposée, c'est à dire la face du support la plus éloignée du film fonctionnel.

Le revêtement comprenant au moins une couche miroir peut être formé directement sur un support, de préférence un substrat en verre. En variante cependant, une ou plusieurs couches intermédiaires peuvent être interposées.

Selon un mode de réalisation, le vitrage comprend l'empilement suivant :
- un substrat arrière transparent en verre plat, par exemple une feuille de verre,
- un intercalaire en matière plastique, notamment thermoplastique de type PVB ou EVA,
- un système à diffusion lumineuse variable comprenant un film fonctionnel encadré par deux supports porteurs d'électrodes, lesdites électrodes étant directement au contact du film fonctionnel,
- un intercalaire en matière plastique, notamment thermoplastique, notamment du type de la première,
- un substrat avant transparent en verre plat.

Selon ce mode de réalisation, le système à diffusion lumineuse variable comprend de préférence deux supports porteurs d'électrode constitués d'une feuille de polyéthylène téréphtalate (PET) recouverte d'une couche électroconductrice d'oxyde d'indium dopé à l'étain (ITO), encadrant un film fonctionnel. Un système à diffusion lumineuse variable de ce type est utilisé dans les vitrages Priva-Lite® de SAINT GOBAIN GLASS. Les intercalaires de feuilletage permettent de fixer les substrats avant et arrière avec les supports porteurs d'électrodes. Un vitrage de ce type correspond à la configuration utilisée dans les vitrages Priva-Lite® de SAINT GOBAIN GLASS.

Selon un autre mode de réalisation, le vitrage comprend l'empilement suivant :
- un substrat arrière transparent en verre plat,
- un intercalaire en matière plastique,
- un système à diffusion lumineuse variable comprenant un film fonctionnel encadré par deux supports porteurs d'électrodes, lesdites électrodes étant directement au contact du film fonctionnel.

Selon ce mode de réalisation, le système à diffusion lumineuse variable comprend deux supports porteurs d'électrode comprenant des feuilles de verre plan flotté comprenant une électrode, encadrant un film fonctionnel comprenant, de préférence, une couche de cristaux liquides.

De préférence, on utilise une feuille de verre présentant une épaisseur d'au moins 3 mm lorsque l'épaisseur du film fonctionnel est inférieure à 30 µm et une feuille de verre présentant une épaisseur d'au moins 2 mm lorsque l'épaisseur du film fonctionnel est supérieure ou égale à 30 µm.

Le revêtement comprenant au moins une couche miroir peut être déposé :
- sur la face externe d'un support ou substrat arrière, et/ou
- sur la face interne d'un support ou substrat arrière, et/ou
- sur la surface externe du support porteur d'électrode arrière, et/ou
- sur la surface interne du support portant l'électrode arrière.

De manière particulièrement avantageuse, le revêtement comprenant au moins une couche miroir est déposé sur une face située au plus près du film fonctionnel, c'est-à-dire sur la face interne d'un support ou substrat arrière ou sur la surface externe ou interne du support porteur d'électrode arrière.

Le demandeur a découvert que plus le revêtement comprenant la couche miroir est proche du film fonctionnel, meilleures sont les propriétés de l'écran de projection.

Par conséquent, selon un mode de réalisation, le revêtement comprenant la couche miroir est placé sur la surface interne du support porteur d'électrode. Dans cette configuration, le revêtement comprenant la couche miroir peut assurer la fonction d'électrode car cette couche peut être une couche électroconductrice.

Selon ce mode de réalisation, la couche miroir peut être une couche électroconductrice faisant partie de l'électrode arrière ou la couche électroconductrice de l'électrode arrière.

La couche miroir servant également de couche électroconductrice peut être une couche métallique ou une couche à base d'oxyde ou nitrure métallique conducteur. La couche miroir doit avoir une épaisseur adaptée pour conférer au vitrage les propriétés requises en termes de transmission et de réflexion lumineuse. De préférence, la couche miroir est une couche d'argent ou de chrome dont on ajuste l'épaisseur de façon appropriée, par exemple, une couche d'argent ou de chrome d'environ 70 nm présentant une transmission lumineuse TL inférieure à 3%.

Selon un mode de réalisation, le vitrage de l'invention peut être obtenu par assemblage :
- d'un substrat en verre arrière comprenant une couche miroir tel qu'un vitrage Miralite® de Saint-Gobain,
- d'un système à diffusion lumineuse variable comprenant un film fonctionnel encadré par deux supports porteurs d'électrodes, lesdites électrodes étant directement au contact du film fonctionnel,
- d'un substrat en verre avant.

La couche miroir est de préférence déposée sur la face interne du substrat arrière. Cette couche miroir est ensuite mise en contact avec la face externe du support porteur d'électrode arrière. Après assemblage, la couche miroir se retrouve à l'intérieur du vitrage et non à l'extérieur. Cela signifie que la couche miroir ne se situe pas sur la surface externe arrière du vitrage.

Le système à diffusion lumineuse variable et les substrats avant et/ou arrière peuvent être assemblés par tous moyens connus tels que des moyens mécaniques ou chimiques. On peut notamment les assembler par feuilletage grâce à l'utilisation d'intercalaire de feuilletage.

Les vitrages comprenant une couche de cristaux liquides peuvent être préparés par mise en contact des supports porteurs d'électrodes, de préférence en verre, par abaissement du deuxième support, avec un angle incliné sur le premier support pour renfermer la couche de cristaux liquides. Le vitrage comprend avantageusement un joint de scellement venant sceller les supports porteurs d'électrodes avant et arrière sur le bord de leurs faces internes. Le joint de scellement peut être une résine époxy. Le joint de scellement peut être interrompu dans sa largeur par une pluralité d'évents. Puis, les supports sont pressés par passage entre deux rouleaux pour répartir la couche de cristaux liquides en évacuant l'air piégé.

Selon ce mode de réalisation, le système à diffusion variable comporte deux supports porteurs d'électrodes, une couche de cristaux liquides et un joint de scellement. La couche miroir peut être une couche de l'électrode, une couche déposée sur la face externe du support porteur d'électrode ou une couche déposée sur la face interne ou externe d'un autre support arrière qui sera ensuite assemblé avec le support porteur d'électrode arrière par collage ou feuilletage avec un intercalaire.

Le procédé de préparation d'un tel vitrage comprenant une couche de cristaux liquides peut comporter les étapes suivantes :
- formation du joint de scellement comportant l'application de la matière de scellement sur une première feuille de verre flotté dotée de la première électrode, de préférence en bordure,
- dépôt par voie liquide de la couche de cristaux liquides sur la première feuille de verre flotté dotée de la première électrode et éventuellement sur la deuxième feuille de verre flotté dotée de la deuxième électrode, avant ou après la formation du joint de scellement,
- après la formation du joint de scellement et le dépôt de la couche de cristaux liquides, la mise en contact des première et deuxième feuilles de verre, notamment par calandrage ou pressage, et
- éventuellement avant la mise en contact des première et deuxième feuilles de verre, la formation d'évents dans le joint de scellement, par l'application discontinue de la matière de scellement et/ou par l'application continue de la matière de scellement et la création des interruptions formant les évents.

Le procédé peut comporter en outre l'application de la matière de scellement additionnelle, formant un pont entre les extrémités latérales du joint. La matière de scellement additionnelle peut être en ladite matière de scellement formant ainsi continuité de matière, de préférence en résine époxy.

Selon un mode de réalisation particulier de l'invention, le vitrage peut comprendre en outre un revêtement additionnel. Ce revêtement additionnel peut être un revêtement opacifiant tel qu'une peinture opacifiante ou un autre revêtement comprenant une couche miroir. Dans ce cas, le revêtement additionnel est séparé de la face avant du vitrage au moins par le revêtement comprenant au moins une couche miroir.

L'invention sera mieux comprise à la lecture de la description qui va suivre, donnée uniquement à titre d'exemple, et faite en référence aux dessins annexés, sur lesquels :
- la figure 1 est une coupe transversale schématique d'un système de projection selon l'invention comprenant un projecteur et un vitrage conforme à un mode de réalisation selon l'invention ;
- la figure 2 est une coupe transversale schématique d'un autre système de projection selon l'invention comprenant un projecteur et un vitrage conforme à un mode de réalisation selon l'invention ;
- la figure 3 comprend des photographies.

Les dessins ne sont pas à l'échelle, pour une représentation claire, car les différences d'épaisseur entre les feuilles à fonction verrière et les autres couches sont importantes.

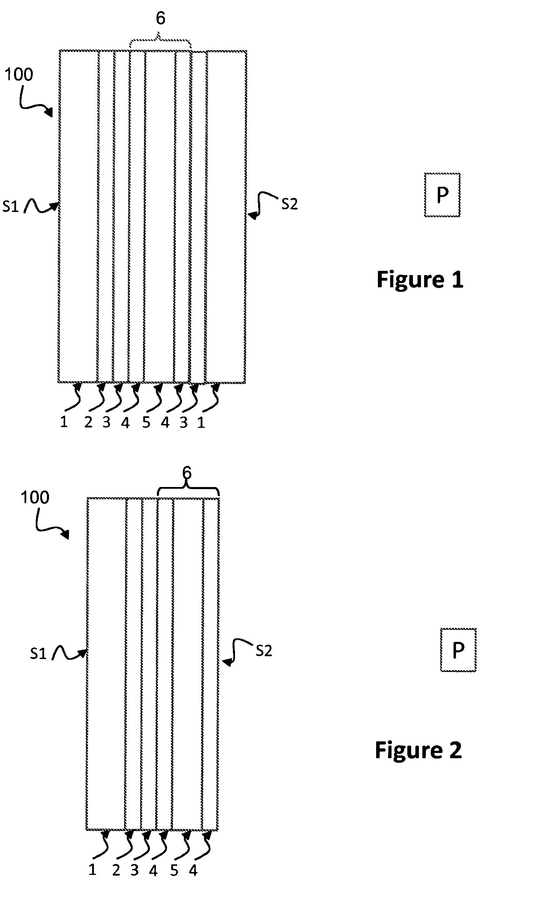

La figure 1 représente un système de projection destiné à fonctionner en réflexion comprenant un projecteur P et un vitrage 100. Le vitrage comprend un système à diffusion lumineuse variable électrocommandable 6 pouvant commuter entre un état miroir et un état diffusant sur la face principale externe ou face avant S2. Comme expliqué ci-dessus, le vitrage selon l'invention présente la particularité de pouvoir être utilisé comme écran de projection, i.e. pour un spectateur côté projecteur P, plutôt que comme écran de rétro-projection, i.e. dans lequel le projecteur est situé derrière le vitrage.

A l'état « OFF », on obtient une face diffusante sur la face avant S2 et une face miroir sur la face arrière S1 du vitrage. A l'état « ON », on obtient deux faces miroirs.

Le vitrage illustré sur la figure 1 comprend :
- deux substrats avant et arrière qui sont des feuilles de verre 1,
- une couche miroir 2 qui a été déposée au préalable sur face interne de la feuille 1 ou sur la face externe de l'intercalaire de feuilletage arrière 3,
- deux intercalaires en matière plastique 3,
- un système à diffusion lumineuse variable 6 comprenant un film fonctionnel 5 susceptible de commuter entre un état transparent et un état diffusant encadré par deux supports porteurs d'électrodes 4, lesdites électrodes étant directement au contact du film fonctionnel.

Selon ce mode de réalisation, les supports porteurs d'électrode sont constitués d'une feuille de PET (polyéthylène téréphtalate) recouverte d'une couche électroconductrice d'ITO (oxyde d'étain et d'indium), encadrant le film fonctionnel.

Les intercalaires de feuilletage permettent de fixer les substrats avant et arrière avec les supports porteurs d'électrodes.

La figure 2 représente un autre système de projection destiné à fonctionner en réflexion comprenant un projecteur P et un vitrage 100.

Le vitrage illustré sur la figure 2 comprend :
- un substrat arrière transparent en verre plat qui est une feuille de verre 1,
- une couche miroir 2 qui a été déposée au préalable sur face interne de la feuille 1 ou sur la face externe de l'intercalaire de feuilletage arrière 3.
- un intercalaire de feuilletage 3,
- un système à diffusion lumineuse variable 6 comprenant un film fonctionnel 5 encadré par deux supports porteurs d'électrodes 4, lesdites électrodes étant directement au contact du film fonctionnel.

Selon ce mode de réalisation, les supports porteurs d'électrode sont constitués de deux feuilles de verre flotté sur lesquelles sont disposées sur les faces internes, une couche électriquement conductrice d'une épaisseur d'environ 20 à 400 nm, réalisée en oxyde d'indium et d'étain (ITO) par exemple. Les couches d'ITO ont une résistance électrique de surface comprise entre 5 Ω/carré et 300 Ω/carré. Au lieu des couches réalisées en ITO, on peut également utiliser dans le même but d'autres couches d'oxyde électriquement conducteur ou des couches d'argent dont la résistance de surface est comparable.

Le film fonctionnel 5 constitué d'une couche de cristaux liquides peut présenter une épaisseur d'environ 5 à 60 µm. La couche de cristaux liquides contient des espaceurs sphériques. Les espaceurs sont constitués d'un polymère dur transparent. A titre d'exemple, le produit de Sekisui Chemical Co., Ltd, connu sous la désignation Micropearl SP® s'est avéré bien convenir comme espaceur. Sur le bord, la couche de cristaux liquides est scellée par un joint adhésif de scellement (non représenté) qui sert à relier les feuilles de verre 4 dotées des électrodes de manière ferme et permanente. La matière adhésive de scellement qui scelle les feuilles de verre distinctes 4 sur leurs bords contient une résine époxy.

Au stade initial (état « off »), c'est-à-dire avant l'application d'une tension électrique, le film fonctionnel à cristaux liquides est translucide, c'est-à-dire qu'il transmet optiquement mais n'est pas transparent. Dès que le courant est branché, la couche de cristaux liquides passe sous l'action du champ électrique alternatif à l'état transparent, c'est-à-dire celui permettant la vision à travers le film fonctionnel.

Le vitrage peut être produit en utilisant un procédé décrit en détail ci-après. Dans une installation industrielle de revêtement en continu, en utilisant le procédé de pulvérisation cathodique réactive soutenue par champ magnétique, des feuilles de verre flotté selon l'invention, sont revêtues dans des chambres successives de pulvérisation d'une couche d'ITO d'une épaisseur approximative de 100 nm ou d'une couche d'argent de 70 nm d'épaisseur.

Deux feuilles de verre distinctes de taille égale et présentant les dimensions souhaitées sont découpées dans une grande feuille de verre revêtue de cette manière et préparées pour la poursuite du traitement.

La couche de cristaux liquides mélangée avec les espaceurs est alors appliquée sur l'une des deux feuilles de verre ainsi traitées. L'application de la couche de cristaux liquides peut être réalisée lors d'une opération appelée remplissage goutte à goutte à l'aide d'un appareil spécifique permettant d'ajuster avec précision les quantités versées. Dans un autre mode de réalisation du procédé, l'application de la couche de cristaux liquides peut être réalisée grâce à un tissu de sérigraphie présentant une taille de maille définie.

La couche adhésive formant le joint de scellement est appliquée directement le long du bord de la feuille de verre avant ou après la dépose de la couche de cristaux liquides. L'application de la matière de scellement est discontinue ou continue puis suivie d'une création des évents (par retrait de matière).

Lorsque les deux feuilles de verre distinctes sont ensuite repoussées l'une contre l'autre, la couche adhésive est comprimée jusqu'à l'épaisseur de la couche de cristaux liquides.

On procède ensuite au calandrage ou au pressage de l'ensemble ainsi formé. Eventuellement, si la couche de cristaux liquides comprend un mélange de cristaux liquides et de monomères, une étape de polymérisation est alors réalisée par exemple, par irradiation à la lumière UV si les monomères utilisés sont photopolymérisables.

L'empilement obtenu est ensuite assemblé avec un substrat revêtu d'un revêtement comprenant une couche miroir. L'assemblage peut être réalisé mécaniquement, par collage ou par l'utilisation d'intercalaire de feuilletage.

L'utilisation du vitrage ainsi défini comme écran de projection fonctionnant en réflexion permet d'améliorer le contraste et/ou la luminosité et/ou l'angle de vue.

Le vitrage selon l'invention peut être utilisé notamment comme cloison interne entre deux pièces ou dans un espace dans un bâtiment. Plus particulièrement, le vitrage de l'invention est particulièrement utile en tant que cloison interne de salle de réunion pour projeter des présentations. On peut commuter entre l'état miroir et l'état diffus permettant la projection. De plus, le revêtement comprenant la couche miroir empêche que l'image projetée apparaisse par transparence sur la face principale. Cela présente un intérêt considérable lorsque les images projetées sont confidentielles.

Le vitrage de l'invention peut également être particulièrement utile en hôtellerie pour séparer une salle de bain et une chambre. On obtient un miroir parfait côté salle de bain. Dans la chambre, on obtient à l'état ON un miroir structurant l'espace entre la chambre et la salle de bain et à l'état OFF un écran de projection, par exemple pour la télévision.

### Exemples

### 1. Matériaux utilisés

Le système à diffusion variable (SDLV1) comprend deux feuilles de polyéthylène téréphtalate recouverte d'une couche d'ITO jouant le rôle d'électrode encadrant le film fonctionnel, c'est à dire le milieu comprenant les gouttelettes de cristaux liquides. Ce système à diffusion variable est actuellement utilisé dans les vitrages Priva-Lite® de SAINT-GOBAIN GLASS. Le film fonctionnel comportant l'émulsion liquide de cristaux liquides nématiques est d'une épaisseur d'environ 10 à 30 µm (de préférence 20 à 25 micromètres). Les feuilles de PET ont une épaisseur d'environ 175 µm. Les deux électrodes sont constituées d'ITO (oxyde d'indium dopé à l'étain) de résistance environ 100 ohms par carré.

Le système à diffusion lumineuse variable (SDLV2) présente la configuration illustrée sur la figure 2 et comprend notamment deux feuilles de verre flotté sur lesquelles sont disposées sur les faces internes, une couche électriquement conductrice d'une épaisseur d'environ 20 à 400 nm, réalisée en oxyde d'indium et d'étain (ITO). La couche de cristaux liquides a une épaisseur de 5 à 60 µm.

Le système à diffusion variable (SDLV3) comprend deux feuilles de verre flotté. On dépose sur la face interne du verre flotté servant de support porteur d'électrode arrière, un revêtement comprenant une couche miroir électriquement conductrice d'une épaisseur d'environ 70 nm, réalisée en argent. On dépose également sur la face interne du verre flotté servant de support porteur d'électrode avant, une couche électriquement conductrice d'une épaisseur d'environ 20 à 400 nm, réalisée en oxyde d'indium et d'étain (ITO). La couche de cristaux liquides a une épaisseur de 5 à 60 µm.

A titre de substrats avant ou arrière additionnels pouvant être utilisés, on peut citer les verres Planilux® ou Diamant® commercialisés par la société Saint-Gobain qui sont des verres plats.

Des intercalaires de feuilletages en EVA ou en PVB ont également été utilisés.

Enfin, trois substrats arrières constitués d'une feuille de verre d'épaisseur 6 mm comprenant un revêtement comprenant une couche miroir ont été également utilisés. Les caractéristiques de ces substrats sont données dans le tableau suivant. Les valeurs de réflexion lumineuse REₑₓₜ et RLᵢₙₜ correspondent respectivement à la mesure de la réflexion lumineuse prise du côté du vitrage ne comprenant pas la couche miroir et du côté comprenant la couche miroir.

| **Caractéristiques** | **Couche d'argent** | **Mirastar®** | **Cool**-**lite® ST 120** |
|---|---|---|---|
| Aspect esthétique | Argent | Argent | Neutre |
| Nature de la couche miroir | Argent | Chrome | Nitrure de niobium |
| - TL | > 1 | 3 | 20 |
| - REₑₓₜ % | > 42 | - | 32 |
| - RLᵢₙₜ % (coté couche) | > 37 | 58 | 27 |
| - Tuv | < 3 | - | 15 |

### II. Exemples de vitrages

Les vitrages des exemples 1, 2, 3 et 5 comprennent un système à diffusion variable SDLV1 feuilleté grâce à des intercalaires de feuilletage entre un verre standard type Planilux® ou Diamant® et un verre à couche miroir choisi parmi un verre Mirastar®, un verre comprenant une couche d'argent ou un verre Cool-lite® comprenant une couche ST 120.

Les exemples 4, 6 et 7 illustrent un mode de réalisation comprenant un mélange actif de cristaux liquides encapsulé entre deux verres à couches conductrices. Dans l'exemple 7, une couche miroir métallique est utilisée comme électrode arrière du système à diffusion lumineuse variable.

| **Empilement** | Exemple Comparatif | Exemple 1 | Exemple 2 | Exemple 3 |
|---|---|---|---|---|
| Substrat arrière | Oui | Oui | Oui | Oui |
| Nature couche miroir | Pas de couche miroir | Mirastar® | Mirastar® | ST120 |
| Position de la couche miroir sur le substrat arrière : | | | | |
| - face externe | Non | Non | Oui | Non |
| - face interne | Non | Oui | Non | Oui |
| Intercalaire | Oui | Oui | Oui | Oui |
| SDLV | 1 | 1 | 1 | 1 |
| Intercalaire | Oui | Oui | Oui | Oui |
| Substrat avant | Oui | Oui | Oui | Oui |

| **Empilement** | Exemple 4 | Exemple 5 | Exemple 6 | Exemple 7 |
|---|---|---|---|---|
| Substrat arrière | Oui | Oui | Oui | Non |
| Nature couche miroir | ST120 | Couche d'Ag | Mirastar® | Couche d'Ag |
| Position de la couche miroir sur le substrat arrière : | | | | |
| - face externe | Non | Non | Non | Non |
| - face interne | Oui | Oui | Oui | Non |
| Intercalaire | Oui | Oui | Oui | Non |
| SDLV | 2 | 1 | 2 | 3 |
| Intercalaire | Non | Oui | Non | Non |
| Substrat avant | Non | Oui | Non | Non |

### III. Gains et angles de vue des vitrages

Dans un premier temps, la fonction de distribution de la réflectance bidirectionnelle BRDF (« Bidirectional Reflectance Distribution Function ») de ces différents vitrages a été mesurée avec un goniophotomètre REFLET-90 de la marque STIL SA. Cela a permis de calculer les caractéristiques telles que le gain et l'angle de vue des écrans de projection sur la face diffusante (à l'état OFF). Le tableau ci-dessous récapitule les résultats obtenus.

| | **Gain** | **Angle de vue** (**°**) |
|---|---|---|
| Exemple comparatif | 0,95 | 22 |
| Exemple 1 | 2,33 | 33 |
| Exemple 2 | 2,25 | 30 |
| Exemple 3 | 1 | 31 |
| Exemple 4 | 0,11 | 98 |

Le vitrage de l'exemple comparatif diffère des vitrages des exemples 1, 2 et 3 en ce qu'il ne comporte pas de couche miroir. Les vitrages de l'invention utilisés comme écran de projection présent un angle de vue d'environ 10° supérieur à l'angle de vue obtenu avec les vitrages de l'art antérieur.

Le vitrage de l'exemple 4 réalisé avec une configuration différente et notamment avec une couche de cristaux liquides permet d'obtenir des valeurs d'angles de vue supérieures

### IV. Analyse du contraste

Afin de tester les qualités des écrans de projection de l'invention lorsqu'ils sont utilisés comme cloison entre deux pièces, des mesures du contraste réalisées dans des conditions spécifiques d'éclairement ont été réalisées. Ces essais permettent de constater l'influence de l'éclairement dans la pièce de projection et dans une pièce connexe sur le contraste.

Dans cet essai, lorsque la pièce de projection n'est pas éclairée (condition « projecteur éteint »), l'éclairement moyen dans la pièce est inférieur à 2 lux.

Pour se placer dans des conditions d'éclairement type salle de bain, une cabine Datacolor TrueVue® 2 avec un tube fluorescent disposé dans le plafond de la cabine et émettant une lumière approchant le spectre de l'illuminant D65 a été utilisé. D'un vitrage diffusant à l'autre, la mesure de luminance est toujours effectuée en un même point de l'image avec un luminancemètre Konica-Minolta® LS-110. La projection d'image est réalisée avec un vidéoprojecteur Canon® XEED SX80 (Luminosité, 3000 lumens, contraste 900:1).

La disposition des éléments est la suivante. Les écrans constitués par les vitrages sont fixés à la cabine. L'image est projetée sur 30cm*30cm de vitrage. Le vidéoprojecteur est situé à 1,5 m de l'écran. Les observateurs et l'appareil photographique sont situés à 2 m de l'écran.

Les mesures d'éclairement dans la pièce de projection et dans la cabine utilisées lors de ces essais :
- Pièce allumée : supérieur à 200 lux,
- Pièce éteinte : 1 à 2 lux,
- Cabine allumée illuminant D65 ; mesure au sol : 850 lux,
- Cabine allumée illuminant D65 ; mesure face vitrage : 650 lux.

Les mesures d'éclairement ont été réalisées à 2 m du vitrage actif côté pièce de projection :
- avec le projecteur éteint, l'éclairement dans la pièce est inférieur à 2 lux,
- avec une projection d'image blanche, avec cabine et pièce de projection éteinte, l'éclairement est de l'ordre de 10 lux,
- avec une projection d'image blanche, avec cabine allumée et pièce de projection éteinte, l'éclairement dans la pièce de projection de l'ordre de 10 lux.

Dans cet essai, la lumière provenant de la cabine a toujours un faible impact sur celle de la pièce de projection. Ce résultat est observé même lorsque l'on utilise des écrans de projection avec une couche miroir présentant une transmission lumineuse d'environ 20% qui transmettent donc davantage de lumière vers la pièce de projection. La raison à cela vient essentiellement du fait que la cabine simulant la salle de bain est de petite taille (typiquement ∼50cmx50cmx50cm).

Cet essai permet de mesurer le contraste du vitrage comme écran de projection. Le contraste est défini comme le rapport de la luminance mesurée quand le projecteur affiche une image blanche (Lb) sur la luminance mesurée quand le projecteur affiche une image sombre (Ln).

Le tableau ci-dessous donne les mesures de luminance effectuées sur les écrans diffus. Dans le cas des ambiances fortement éclairées, on peut voir que le vitrage de l'exemple 1 conserve une supériorité importante en termes de contraste par rapport aux vitrages de l'exemple comparatif et aux vitrages comprenant une couche miroir présentant une transmission lumineuse d'environ 20% (exemple 3).

Dans ce tableau, le terme ON signifie que la lumière de la pièce, de la cabine ou le projecteur est allumé ou le terme OFF signifie que la lumière de la pièce, de la cabine ou le projecteur est éteint.

| Ecran de projection : Exemple comparatif | | | | |
|---|---|---|---|---|
| projecteur | Cabine | Pièce de projection | Luminance (cd/m²) | C = Lb/Ln |
| OFF | ON | OFF | 76,5 | 12,4 |
| ON | ON | OFF | 948 | |
| ON | OFF | OFF | 857 | 519,4 |
| OFF | OFF | OFF | 1,65 | |
| OFF | ON | ON | 83,2 | 11,2 |
| ON | ON | ON | 935 | |
| ON | OFF | ON | 864 | 108,4 |
| OFF | OFF | ON | 7,97 | |

| Ecran de projection : Exemple 1 | | | | |
|---|---|---|---|---|
| projecteur | Cabine | Pièce de projection | Luminance (cd/m²) | C = Lb/Ln |
| OFF | ON | OFF | 9 | 327,8 |
| ON | ON | OFF | 2950 | |
| ON | OFF | OFF | 2960 | 518,4 |
| OFF | OFF | OFF | 5,71 | |
| OFF | ON | ON | 25.6 | 116,8 |
| ON | ON | ON | 2990 | |
| ON | OFF | ON | 2970 | 134,4 |
| OFF | OFF | ON | 22,1 | |

| Ecran de projection : Exemple 2 | | | | |
|---|---|---|---|---|
| projecteur | Cabine | Pièce de projection | Luminance (cd/m²) | C = Lb/Ln |
| OFF | ON | OFF | 7,92 | 337,1 |
| ON | ON | OFF | 2670 | |
| ON | OFF | OFF | 2670 | 507,6 |
| OFF | OFF | OFF | 5,26 | |
| OFF | ON | ON | 26,1 | 103,1 |
| ON | ON | ON | 2690 | |
| ON | OFF | ON | 2700 | 115,4 |
| OFF | OFF | ON | 23,4 | |

| Ecran de projection : Exemple 3 | | | | |
|---|---|---|---|---|
| projecteur | Cabine | Pièce de projection | Luminance (cd/m²) | C = Lb/Ln |
| OFF | ON | OFF | 20,6 | 66,0 |
| ON | ON | OFF | 1360 | |
| ON | OFF | OFF | 1340 | 515,4 |
| OFF | OFF | OFF | 2,6 | |
| OFF | ON | ON | 28,4 | 48,2 |
| ON | ON | ON | 1370 | |
| ON | OFF | ON | 1350 | 133,7 |
| OFF | OFF | ON | 10,1 | |

| Ecran de projection : Exemple 4 | | | | |
|---|---|---|---|---|
| projecteur | Cabine | Pièce de projection | Luminance (cd/m²) | C = Lb/Ln |
| OFF | ON | OFF | 25,9 | 10,4 |
| ON | ON | OFF | 269 | |
| ON | OFF | OFF | 244 | 488,0 |
| OFF | OFF | OFF | 0,5 | |
| OFF | ON | ON | 34,2 | 8,1 |
| ON | ON | ON | 277 | |
| ON | OFF | ON | 252 | 27,4 |
| OFF | OFF | ON | 9,19 | |

On constate que de très bons résultats sont obtenus pour les exemples de l'invention. Les valeurs de contrastes ne varient quasiment pas pour les exemples 1 et 2.

L'exemple 3 diffère de l'exemple 1 essentiellement en ce que la couche miroir présente des valeurs de transmission lumineuse plus élevée. Les valeurs de contraste sont meilleures pour l'exemple 1. Cela montre que plus la transmission lumineuse de la couche miroir est faible, plus la transmission lumineuse du vitrage est faible, meilleur est le contraste.

### V. Etude visuelle de la qualité des écrans

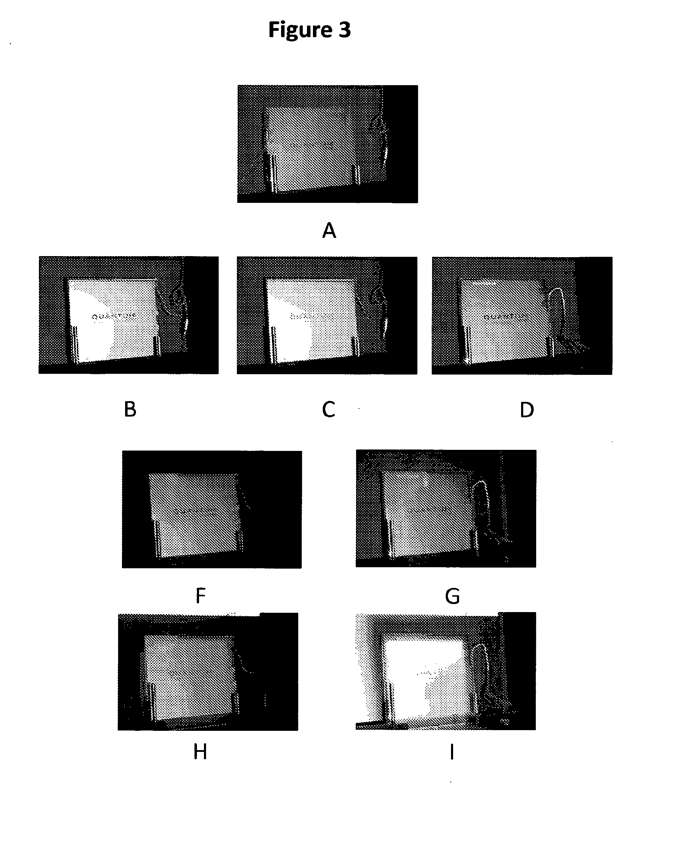

Afin de montrer la qualité supérieure des vitrages utilisés comme écran de projection de l'invention, un panel de 5 personnes a apprécié visuellement la luminosité et la lisibilité lorsqu'une image est projetée sur la face avant des vitrages. Chaque image projetée évaluée par le panel a fait l'objet d'une photographie. Ces photographies ont été regroupées sur la figure 3.

Le panel a attribué pour chaque image projetée sur un vitrage un indicateur d'appréciation choisi parmi : «- » moyen, « + » correcte, « ++ » bon, « +++ » excellent. Le tableau ci-dessous récapitule les vitrages, condition d'évaluation et appréciation du panel ainsi que la référence de la photographie correspondante.

Les systèmes à diffusion lumineuse variable sont dans l'état diffusant. La pièce où est réalisée la projection est éteinte. Dans le tableau ci-dessous les termes ON et OFF se rapportent respectivement à l'état allumé ou éteint de la cabine représentant une pièce connexe.

| **Photo.** | **Vitrage** | **Filtre** | **Etat** | **Qualité de l'écran** | |
|---|---|---|---|---|---|
| | | | | **luminosité** | **lisibilité** |
| A | Exemple comparatif | non | OFF | - | ++ |
| B | Ex. 1 | non | OFF | +++ | +++ |
| C | Ex. 2 | non | OFF | +++ | + |
| D | Ex. 3 | non | OFF | ++ | +++ |
| F | Ex. 1 | Oui | OFF | +++ | +++ |
| G | Ex. 3 | Oui | OFF | +++ | ++ |
| H | Ex. 1 | Oui | ON | ++ | ++ |
| I | Ex. 3 | Oui | ON | - | ++ |

Les photographies H et I ont été réalisées avec la lumière de la cabine allumée et la lumière de la pièce éteinte. Cependant, un filtre a alors été utilisé pour éviter la saturation de l'appareil photographique.

Les photographies A, B, C, D, F et G ont été réalisées avec la lumière de la cabine et la lumière de la pièce éteintes. Les photographies F et G ont également été réalisées avec un filtre pour pouvoir effectuer une comparaison avec les photographies H et I.

L'exemple 1 peut être comparé à l'exemple 2. Ces deux vitrages diffèrent uniquement de par la position de la couche miroir. La couche miroir est située pour l'exemple 1 à l'intérieur du vitrage sur la face interne du substrat arrière alors que pour l'exemple 2, la couche miroir est située sur la face externe du substrat arrière. A l'état OFF, la projection d'images sur la face diffusante montre clairement que les meilleurs résultats sont obtenus lorsque la couche miroir est située au plus près du film fonctionnel, c'est-à-dire par exemple avec une couche miroir de type Mirastar® placée à l'intérieur du vitrage. Cette configuration assure à la fois un bon état miroir à l'état ON et une bonne qualité de l'écran de projection à l'état OFF.

L'exemple 1 peut également être comparé à l'exemple 3. L'exemple 3 diffère de l'exemple 1 essentiellement en ce que la couche miroir présente des valeurs de transmission lumineuse plus élevée. Le vitrage de l'exemple 3 présente une valeur de transmission lumineuse de 17,1% alors que le vitrage de l'exemple 1 présente une valeur de transmission lumineuse inférieure à 3%. La comparaison des photographies F, G, H et I confirme que de meilleurs résultats sont obtenus avec un vitrage comprenant une plus faible transmission lumineuse.

## Revendications

1. Vitrage (100) utilisable comme écran de projection en réflexion, le vitrage (100) comprenant une face avant (S2) et une face arrière (S1) **caractérisé en ce que** :
ledit vitrage (100) comprend :
- un système à diffusion lumineuse variable (6) comprenant un film fonctionnel (5) susceptible de commuter entre un état transparent et un état diffusant,
- un revêteme comprenant au moins une couche miroir (2), ledit revêtement étant séparé de la face avant (S2) au moins par le film fonctionnet (5),
ledit vitrage (100) présente :
- une transmission lumineuse TL inférieure à 20%,
- une réflexion lumineuse RL supérieure à 25%.

2. Vitrag (100) selon la revendication 1 **caractérisé en ce que** le système diffusion lumineuse variable (6) est électrocommandable et comprend ledit film fonctionnel (5) encadré par deux supports porteurs d'électrodes (4) avant et arrière, lesdites électrodes comprenant chacune au moins une couche électroconductrice et étant directement au contact du film fonctionnel (5).

3. Vitrage (100) selon la revendication 2 **caractérisé en ce que** la couche miroir (2) est la couche étectroconductrice de l'électrode arrière.

4. Vitrag (100) selon l'une quelconque des revendications précédentes **caractérisé en ce qu'**il présente une transmission lumineuse TL inférieure à 5% et/ou une réflexon lumineuse mesurée supérieure à 50%.

5. Vitrage (100) selon l'une quelconque des revendications précédentes **caractérisé en ce que** la couche miroir (2) est une couche métallique ou une couche comprenant un nitrure métallique comprenant de préférence au moins un métal choisi dans le groupe constitué de l'argent, l'aluminium, le titane, l'or, le nickel, le chrome, le cuivre, le rhodium, le platine, le palladium, le cobalt, le manganèse, le molybdène, le tungstène, le hafnium, le niobium, le fer et le tantale, y compris des alliages de ceux-ci.

6. Vitrage (100) selon l'une quelconque des revendications 1-4 **caractérisé en ce que** la couche miroir (2) est choisie parmi le groupe constitué d'une couche d'argent, de chrome, de niobium, de nitrure de niobium, d'acier, de préférence inoxydable ou d'alliage comprenant majoritairement de l'argent, du chrome, du fer ou du Niobium.

7. Vitrage (100) selon l'une quelconque des revendications précédentes **caractérisé en ce que** la couche miroir (2) présente une épaisseur comprise entre 50 et 80 nm.

8. Vitrage (100) selon l'une quelconque des revendications précédentes **caractérisé en ce que** la couche miroir (2) est placée à l'intérieur du vitrage (100).

9. Vitrage (100) selon l'une quelconque des revendications précédentes **caractérisé en ce que** le vitrage (100) comprend :
- un substrat arrière (1) transparent en verre plat,
- un intercalaire (3) en matière plastique,
- le système à diffusion lumineuse variable (6) comprenant ledit film fonctionnel (5) encadré par deux supports porteurs d'électrodes (4), lesdites électrodes étant directement au contact du film fonctionnel (5),
- un intercalaire (3) en matière plastique,
- un substrat avant (1) transparent en verre plat.

10. Vitrage (100) selon la revendication 9 **caractérisé en ce que** les deux supports porteurs d'électrodes (4) sont chacun constitués d'une feuille de polyéthylène téréphtalate recouverte d'une couche électroconductrice d'oxyde d'étain et d'indium, encadrant le film fonctionnel (5).

11. Vitrage (100) selon l'une quelconque des revendications 1 à 8 **caractérisé en ce que** le vitrage (100) comprend :
- un substrat arrière (1) transparent en verre plat,
- un intercalaire (3) en matière plastique,
- le système à diffusion lumineuse variable (6) comprenant ledit film fonctionnel (5) encadré par deux supports porteurs d'électrodes (14), lesdites électrodes étant directement au contact du film fonctionnel (5).

12. Vitrage (100) selon la revendication 11 **caractérisée en ce que** chacun des deux supports porteurs d'électrodes (4) comprend de feuilles de verre plan flotté comprenant une électrode.

13. Vitrage (100) selon l'une quelconque des revendications 9 à 12 **caractérisé en ce que** le revêtement comprenant au moins ladite couche miroir (2) est déposé :
- sur la face externe d'un substrat arrière (1), et/ou
- sur la face interne d'un substrat arriére (1), et/ou
- sur la surface externe du support porteur d'électrode arrière (4), et/ou
- sur la surface interne du support portant l'électrode arrière (4).

14. Vitrage (100) selon l'une quelconque des revendications précédentes **caractérisé en ce que** le vitrage (100) est utilisé comme écran de projection fonctionnant en réflexion, ledit vitrage (100) comprenant la face avant (S2) sur laquelle est projetée l'image et la face arrière (S1).

15. Système de projection comprenant un vitrage (100) utilisé comme écran de projection en réflexion et un projecteur (P), ledit vitrage (100) comprenant une face avant (S2) sur laquelle est projetée l'image et une face arrière (S1) **caractérisé en ce que** :
ledit vitrage (100) comprend :
- un système à diffusion lumineuse variable (6) comprenant un film fonctionnel (5) susceptible de commuter entre un état transparent et un état diffusant,
- un revêtement comprenant au moins une couche miroir (2), ledit revêtement étant séparé de la face avant (S2) au moins par le film fonctionnel (15),
ledit vitrage (100) présente :
- une transmission lumineuse TL inférieure à 20%,
- une réflexion lumineuse RL supérieure à 25%.

16. Procédé de projection en réflexion selon lequel on dispose d'un écran de projection fonctionnant en réflexion et d'un projecteur, ledit procédé consistant à projeter grâce au projecteur des images sur l'écran de projection, ledit écran de projection comprenant un vitrage (100) tel que défini dans l'une quelconque des revendications 1 à 14.

## Patentansprüche

1. Verglasung (100), die als Reflexionsprojektionsschirm verwendbar ist, wobei die Verglasung (100) eine Vorderseite (S2) und eine Rückseite (S1) umfasst, **dadurch gekennzeichnet, dass**:
die Verglasung (100) umfasst:
- ein System mit variabler Lichtstreuung (6), das einen Funktionsfilm (5) umfasst, welcher geeignet ist, zwischen einem transparenten Zustand und einem streuenden Zustand umzuschalten,
- eine Beschichtung, die wenigstens eine Spiegelschicht (2) umfasst, wobei die Beschichtung von der Vorderseite (S2) wenigstens durch den Funktionsfilm (5) getrennt ist,
die Verglasung (100) aufweist:
- eine Lichttransmission TL von weniger als 20 %,
- eine Lichtreflexion RL von mehr als 25 %.

2. Verglasung (100) nach Anspruch 1, **dadurch gekennzeichnet, dass** das System mit variabler Lichtstreuung (6) elektrisch steuerbar ist und den Funktionsfilm (5), welcher durch zwei eine vordere und eine hintere Elektrode tragende Halter (4) eingerahmt ist, umfasst, wobei die Elektroden jeweils wenigstens eine elektrisch leitende Schicht umfassen und mit dem Funktionsfilm (5) direkt in Kontakt sind.

3. Verglasung (100) nach Anspruch 2, **dadurch gekennzeichnet, dass** die Spiegelschicht (2) die elektrisch leitende Schicht der hinteren Elektrode ist.

4. Verglasung (100) nach einem der vorhergehenden Ansprüche, **dadurch gekennzeichnet, dass** sie eine Lichttransmission TL von weniger als 5 % und/oder eine gemessene Lichtreflexion von mehr als 50 % aufweist.

5. Verglasung (100) nach einem der vorhergehenden Ansprüche, **dadurch gekennzeichnet, dass** die Spiegelschicht (2) eine Metallschicht oder eine Schicht mit einem Metallnitrid ist, die vorzugsweise wenigstens ein Metall, ausgewählt aus der Gruppe bestehend aus Silber, Aluminium, Titan , Gold, Nickel, Chrom, Kupfer, Rhodium, Platin, Palladium, Kobalt, Mangan, Molybdän, Wolfram, Hafnium, Niob, Eisen und Tantal, einschließlich Legierungen von diesen, umfasst.

6. Verglasung (100) nach einem der Ansprüche 1 bis 4, **dadurch gekennzeichnet, dass** die Spiegelschicht (2) aus der Gruppe bestehend aus einer Schicht aus Silber, Chrom, Niob, Niobnitrid, Stahl, vorzugsweise nicht rostendem, oder Legierung, die hauptsächlich Silber, Chrom, Eisen oder Niob umfasst, ausgewählt ist.

7. Verglasung (100) nach einem der vorhergehenden Ansprüche, **dadurch gekennzeichnet, dass** die Spiegelschicht (2) eine Dicke zwischen 50 und 80 nm aufweist.

8. Verglasung (100) nach einem der vorhergehenden Ansprüche, **dadurch gekennzeichnet, dass** die Spiegelschicht (2) innerhalb der Verglasung (100) angeordnet ist.

9. Verglasung (100) nach einem der vorhergehenden Ansprüche, **dadurch gekennzeichnet, dass** die Verglasung (100) umfasst:
- ein transparentes hinteres Substrat (1) aus Flachglas,
- einen Abstandshalter (3) aus Kunststoff,
- das System mit variabler Lichtstreuung (6), das den Funktionsfilm (5), welcher durch zwei Elektroden tragende Halter (4) eingerahmt ist, umfasst, wobei die Elektroden mit dem Funktionsfilm (5) direkt in Kontakt sind,
- einen Abstandshalter (3) aus Kunststoff,
- ein transparentes vorderes Substrat (1) aus Flachglas.

10. Verglasung (100) nach Anspruch 9, **dadurch gekennzeichnet, dass** die zwei Elektroden tragenden Halter (4) jeweils von einer mit einer elektrisch leitenden Schicht aus Zinn- und Indiumoxid überzogenen Folie aus Polyethylenterephthalat, welche den Funktionsfilm (5) einrahmt, gebildet sind.

11. Verglasung (100) nach einem der Ansprüche 1 bis 8, **dadurch gekennzeichnet, dass** die Verglasung (100) umfasst:
- ein transparentes hinteres Substrat (1) aus Flachglas,
- einen Abstandshalter (3) aus Kunststoff,
- das System mit variabler Lichtstreuung (6), das den Funktionsfilm (5), welcher durch zwei Elektroden tragende Halter (4) eingerahmt ist, umfasst, wobei die Elektroden mit dem Funktionsfilm (5) direkt in Kontakt sind.

12. Verglasung (100) nach Anspruch 11, **dadurch gekennzeichnet, dass** ein jeder der zwei Elektroden tragenden Halter (4) Scheiben aus flachem Floatglas mit einer Elektrode umfassen.

13. Verglasung (100) nach einem der Ansprüche 9 bis 12, **dadurch gekennzeichnet, dass** die Beschichtung, die wenigstens die Spiegelschicht (2) umfasst, abgeschieden ist:
- auf der Außenseite eines hinteren Substrats (1) und/oder
- auf der Innenseite eines hinteren Substrats (1) und/oder
- auf der Außenfläche des die hintere Elektrode tragenden Halters (4) und/oder
- auf der Innenfläche des die hintere Elektrode tragenden Halters (4).

14. Verglasung (100) nach einem der vorhergehenden Ansprüche, **dadurch gekennzeichnet, dass** die Verglasung (100) als reflektierend funktionierender Projektionsschirm verwendet wird, wobei die Verglasung (100) die Vorderseite (S2), auf die das Bild projiziert wird, und die Rückseite (S1) umfasst.

15. Projektionssystem, umfassend eine Verglasung (100), die als Reflexionsprojektionsschirm verwendet wird, und einen Projektor (P), wobei die Verglasung (100) eine Vorderseite (S2), auf die das Bild projiziert wird, und eine Rückseite (S1) umfasst, **dadurch gekennzeichnet, dass**:
die Verglasung (100) umfasst:
- ein System mit variabler Lichtstreuung (6), das einen Funktionsfilm (5) umfasst, welcher geeignet ist, zwischen einem transparenten Zustand und einem streuenden Zustand umzuschalten,
- eine Beschichtung, die wenigstens eine Spiegelschicht (2) umfasst, wobei die Beschichtung von der Vorderseite (S2) wenigstens durch den Funktionsfilm (5) getrennt ist,
die Verglasung (100) aufweist:
- eine Lichttransmission TL von weniger als 20 %,
- eine Lichtreflexion RL von mehr als 25 %.

16. Verfahren zur Reflexionsprojektion, wonach man über einen reflektierend funktionierenden Projektionsschirm und über einen Projektor verfügt, wobei das Verfahren darin besteht, mit Hilfe des Projektors Bilder auf den Projektionsschirm zu projizieren, wobei der Projektionsschirm eine Verglasung (100), wie sie in einem der Ansprüche 1 bis 14 definiert ist, umfasst.

## Claims

1. A glazing usable as a reflective projection screen, the glazing (100) comprising a front face (52) and a rear face (51), **characterized in that**:
said glazing (100) comprises:
- a variable light scattering system (6) comprising a functional film (5) capable of switching between a transparent state and a scattering state,
- a coating comprising at least one mirror layer (2), said coating being separated from the front face (52) at least by the functional film (5),
said glazing (100) exhibits:
- a light transmission LT of less than 20%,
- a light reflection LR of greater than 25%.

2. The glazing (100) as claimed in claim 1, **characterized in that** the variable light scattering system (6) is electrically controllable and comprises said functional film (5) framed by two front and rear electrode-carrying supports (4), said electrodes each comprising at least one electrically conducting layer and being directly in contact with the functional film (5).

3. The glazing (100) as claimed in claim 2, **characterized in that** the mirror layer (2) is the electrically conducting layer of the rear electrode.

4. The glazing (100) as claimed in any one of the preceding claims, **characterized in that** it exhibits a light transmission LT of less than 5% and/or a measured light reflection of greater than 50%.

5. The glazing (100) as claimed in any one of the preceding claims, **characterized in that** the mirror layer (2) is a metallic layer or a layer comprising a metal nitride preferably comprising at least one metal chosen from the group consisting of silver, aluminum, titanium, gold, nickel, chromium, copper, rhodium, platinum, palladium, cobalt, manganese, molybdenum, tungsten, hafnium, niobium, iron and tantalum, including alloys of these.

6. The glazing (100) as claimed in any one of the claims 1 to 4, **characterized in that** the mirror layer (2) is chosen from the group consisting of a layer of silver, chromium, niobium, niobium nitride, steel, preferably stainless steel, and alloy predominately comprising silver, chromium, iron or niobium.

7. The glazing (100) as claimed in any one of the preceding claims, **characterized in that** the mirror layer (2) exhibits a thickness of between 50 and 80 nm.

8. The glazing (100) as claimed in any one of the preceding claims, **characterized in that** the mirror layer (2) is placed inside the glazing (100).

9. The glazing (100) as claimed in any one of the preceding claims, **characterized in that** the glazing (100) comprises:
- a transparent rear substrate (1) made of flat glass,
- a plastic insert (3),
- a variable light scattering system (6) comprising said functional film (5) framed by two electrode-carrying supports (4), said electrodes being directly in contact with the functional film (5),
- a plastic insert (3),
- a transparent front substrate (1) made of flat glass.

10. The glazing (100) as claimed in claim 9, **characterized in that** the two electrode-carrying supports (4) are everyone composed of a polyethylene terephthalate sheet covered with an electrically conducting layer of indium tin oxide framing the functional film (5).

11. The glazing (100) as claimed in any one of claims 1 to 8, **characterized in that** the glazing (100) comprises:
- a transparent rear substrate (1) made of flat glass,
- a plastic insert (3),
- a variable light scattering system (6) comprising said functional film (5) framed by two electrode-carrying supports (4), said electrodes being directly in contact with the functional film (5).

12. The glazing (100) as claimed in claim 11, **characterized in that** each of the two electrode-carrying supports (4) comprises flat float glass sheets comprising an electrode.

13. The glazing (100) as claimed in any one of claims 9 to 12, **characterized in that** the coating comprising at least said mirror layer (2) is deposited:
- on the external face of a rear substrate (1), and/or
- on the internal face of a rear substrate (1), and/or
- on the external surface of the rear electrode-carrying support (4), and/or
- on the internal surface of the support carrying the rear electrode (4).

14. The glazing (100) as claimed in any one of the preceding claims, **characterized in that** the glazing (100) is used as projection screen operating in reflection, said glazing (100) comprising a front face (52), onto which the image is projected, and a rear face (51).

15. A projection system comprising a glazing (100) used as reflective projection screen and a projector (P), said glazing (100) comprising a front face (52), onto which the image is projected, and a rear face (51), **characterized in that**:
said glazing (100) comprises:
- a variable light scattering system (6) comprising a functional film (5) capable of switching between a transparent state and a scattering state,
- a coating comprising at least one mirror layer (2), said coating being separated from the front face (52) at least by the functional film (5),
said glazing (100) exhibits:
- a light transmission LT of less than 20%,
- a light reflection LR of greater than 25%.

16. A method for projection in reflection according to which a projection screen operating in reflection and a projector are available, said method consisting in projecting images, by virtue of the projector, onto the projection screen, said projection screen comprising a glazing (100) as defined in any one of claims 1 to 14.
